# EUROPÄISCHE PATENTSCHRIFT

(11) **EP 0 759 368 B1**
(45) Veröffentlichungstag und Bekanntmachung des Hinweises auf die Patenterteilung: **16.04.2003**
(21) Anmeldenummer: 96113047.3
(22) Anmeldetag: 14.08.1996
(51) Int. Cl.: B60C 15/02, B60C 15/036

(54) **Fahrzeugrad mit wulstlosem Fahrzeugluftreifen**
Vehicle wheel with beadless tyre
Roue de véhicule ayant un bandage pneumatique sans talons

(30) Priorität: 23.08.1995 DE 19530939
(43) Veröffentlichungstag der Anmeldung: 26.02.1997
(73) Patentinhaber: Continental Aktiengesellschaft, 30165 Hannover (DE)
(72) Erfinder: Pakur, Henryk, 31675 Bückeburg (DE); Jenke, Roland, 29693 Hademsdorf (DE); Roik, Geert, 38162 Cremlingen (DE); Baumgarten, Rainer, 29649 Wietzendorf (DE)

(56) Entgegenhaltungen:
- DE-A- 2 157 076
- DE-U- 8 804 622
- GB-A- 2 030 526
- US-A- 1 919 910
- US-A- 2 016 150
- US-A- 3 719 219

## Beschreibung

Die Erfindung betrifft ein Fahrzeugrad mit wulstlosem Fahrzeugluftreifen aus Gummi oder gummiähnlichen Stoffen und aus einer innenliegenden Felge, wobei der Fahrzeugluftreifen mit einer Karkasse ausgebildet ist.

Herkömmliche Fahrzeugluftreifen werden mit einem Wulstkern radial außen auf einer Felge befestigt. Die Fertigung solcher Fahrzeugluftreifen mit Kernwulst ist sehr aufwendig und materialintensiv. In verschiedenen Verfahrensschritten muß Stahldraht zur Verfügung gestellt, aufbereitet, mit Kautschukmaterial verbunden und während des Reifenaufbauprozesses auf die Karkassenlagen geführt, dort genau gesetzt und mit der Karkasse umwickelt werden. Nach erfolgter Vulkanisation ist die Montage eines solchen Reifens axial innerhalb von Felgenhörnern aufgrund der erforderlichen Zugfestigkeit der Reifenkerne sehr schwierig und aufwendig. Zur besseren Montierbarkeit sind verschiedenste Montagehilfen erforderlich. Üblicherweise werden die Felgen zur besseren Montierbarkeit als Tiefbettfelgen ausgebildet. Zur Erzielung hinreichender Flexibilität der Reifenseitenwände für die Komforteigenschaften des Reifens einerseits und erforderlicher Steifigkeit der Reifenseitenwand, zumindest im radial inneren Bereich der Reifenseitenwand, für gute Handling-Eigenschaften des Reifens andererseits ist es bekannt, verschiedenste Verstärkungsschichten und Wulstreiter im Bereich des Kernwulstes auszubilden. Hierdurch wird die Herstellung der Reifenseitenwand im Bereich des Wulstes jedoch noch aufwendiger. Jede einzelne Maßnahme und jedes einzelne Material bringt neben den gewünschten Vorteilen jeweils auch Nachteile mit sich. Bei so aufwendigen Reifenbereichen, wie ihn der Kernwulst darstellt, wird aufgrund der Vielzahl von Materialien und Verfahrensschritten ein sehr kompliziertes System von Wechselwirkungen geschaffen, die sich unterschiedlich stark und in unterschiedlicher Weise negativ auf die Produktqualität auswirken können. Beim Auslegen eines solchen Fahrzeugluftreifens sind dementsprechend die Freiheitsgrade für eine Veränderung von Komponenten im Einflußbereich des Kernwulstes zur Verbesserung der Reifeneigenschaften aufgrund dieser Vielzahl von Wechselwirkungen stark eingeschränkt.

Von CTS-Reifen ist es bekannt, die Fahrzeugreifen radial innerhalb der Felge des Kernwulstes zu befestigen. Hierdurch lassen sich zwar Notlaufeigenschaften im radial äußeren Bereich der Felge schaffen. Die Probleme beim Kernaufbau sind auch hierdurch unvermindert vorhanden. Die Montage des Kernwulstes radial innerhalb der Felge erfordert ebenfalls aufgrund der hohen Zugfestigkeit des Kernwulstes zusätzliche Einrichtungen und zusätzliche Montageschritte.

Aus der US 1919 910 ist ein Fahrzeugrad bekannt, bei dem ein kernwulstloser Reifen radial innerhalb in in der Innenseite der Felge ausgebildeten Umfangsnuten mit zusätzlichen Klemmringen befestigt ist.

Aus der DE-OS-2 157 076 ist ein Fahrzeugrad mit kernwulstlosem Luftreifen mit zwei Karkassenlagen bekannt. Radial nach außen abgeknickte Hörner einer Felge reichen in einen Umfangsschlitz am radial inneren Ende einer jeden Reifenseitenwand zwischen die Karkassenlagenenden, so daß die beiden Karkassenlagen jeweils das Felgenhorn von axial innerhalb und axial außerhalb umgreifen. Die Reifenseitenwände werden sowohl axial innerhalb als auch axial außerhalb direkt am Felgenhorn befestigt und in diesem formschlüssig verankert. Das Felgenhorn ermöglicht zwar im radial inneren Bereich der Reifenseitenwand eine sehr steife Ausbildung. Die für gute Komforteigenschaften erforderliche Flexibilität muß dabei jedoch vollständig im Seitenwandbereich radial außerhalb der Felgenhörner erzielt werden, da ein radiales Einfedern der Seitenwand durch elastisches Verkrümmen im Bereich des Felgenhorns nicht möglich ist. Das Felgenhorn kann für gute Komforteigenschaften nur sehr kurz ausgebildet werden, wodurch jedoch die Steifigkeit der Seitenwand verringert wird und somit die Handling-Eigenschaften verschlechtert werden. Die Befestigung im Bereich des Felgenhorns, die dadurch bedingte vollständige Steifigkeit im Bereich des Felgenhorns und die dadurch bedingte Reduzierung der Flexibilitätsbereiche vollständig auf den radial äußeren Seitenwandbereich zwischen Felgenhorn und Reifenschulter ermöglichen somit nur die wahlweise Einstellung entweder einer besonders guten Handling-Einstellung durch ein besonders groß ausgebildetes Felgenhorn oder von besonders guten Komforteigenschaften durch besonders ein klein ausgebildetes Felgenhorn jeweils unter Inkaufnahme verschlechterter Komfort- bzw. Handlingeigenschaften.

Aus der DE-3 206 171 A1 ist ein gattungsgemäßer wulstloser Fahrzeugreifen bekannt, dessen Reifenseitenwände im radial inneren Bereich von axial innen an nach radial außen gekrümmten Felgenhörnern einer Felge befestigt sind. Auch eine derartige Ausbildung ermöglicht durch die Befestigung der Reifenseitenwand am Felgenhorn lediglich eine Einstellung besonders guter Handling-Eigenschaften oder besonders guter Komforteigenschaften in Abhängigkeit von der gewählten Felgenhorngröße unter Inkaufnahme von verschlechterten Komfort- bzw. Handling-Eigenschaften.

Der Erfindung liegt die Aufgabe zugrunde, Fahrzeugräder mit kernwulstlosen Fahrzeugluftreifen aus Gummi oder gummiähnlichen Stoffen, die mit einer Karkasse ausgebildet sind, mit optimierten Handling- und mit optimierten Komforteigenschaften zu schaffen.

Erfindungsgemäß wird das Problem durch die Ausbildung eines Fahrzeugrades gemäß den Merkmalen von Anspruch 1 gelöst. Die Befestigung des Fahrzeugluftreifens mit seinen Seitenwänden an der innenliegenden Seite der Felge ermöglicht eine sichere Kraftübertragung zwischen Fahrzeugluftreifen und Felge in Umfangsrichtung, in axialer und in radialer Richtung. Die Ausbildung der Felge mit an ihren axialen Felgenrändern radial nach außen hin ausgebildeten Verlängerungen, die als im wesentlichen axiale Auflageflächen für die korrespondierende Reifenseitenwand ausgebildet sind, ermöglicht, daß die innenliegende Felge durch ihre Verlängerungen den die Reifenseitenwand in axialer Richtung stützt und somit beim Handling die axial nach innen besonders stark belastete Seitenwand hinreichend versteift. Beim normalen Fahrbetrieb ist indes die Seitenwand auch im Bereich der Felgenhörner flexibel. Bei einwirkenden Kraftstößen kann der gesamte Reifenseitenwandbereich durch elastische Verformung zur Eindämfpung gekrümmt werden. Ohne zu starke Belastung einzelner Seitenwandbereiche ist eine optimale Einfederung und Dämpfung möglich. Somit ist ein Fahrzeugluftreifen ohne aufwendige Kernwulstausbildung mit einfachen Mitteln, mit guten Handling-Eigenschaften und mit guten Komfort-Eigenschaften geschaffen.

Bevorzugt wird die Felgenverlängerung bis in eine radiale Höhe von 0,15 bis 0,55 mal, vorzugsweise 0,2 bis 0,3 mal, der maximalen Reifenhöhe ausgebildet.

Durch eine radial nach außen gekrümmte Felgenverlängerung mit nach radial außen hin abnehmbarer Steifigkeit werden die Übergänge zwischen Felge und und Felgenhorn sowie zwischen Felgenhorn und felgenhornfreiem Seitenwandbereich im Verlauf ihrer Stützfunktion und ihrer Flexibilität vergleichmäßigt, so daß auch Felgenhörner mit besonders weiter radialer Erstreckung ausgebildet werden können, die - auch während des Handlings - aufgrund ihrer eigenen Flexibilität im radial äußeren Bereich gute Komforteigenschaften ermöglichen und dennoch ein sicheres Handling aufgrund ihrer über einen weiten Reifenseitenwandbereich hinwegreichenden axialen Stützfunktion ermöglichen. Bevorzugte Ausführungsformen einer solchen in ihrer Steifigkeit nach radial außen hin abnehmbaren Felgenverlängerung stellen die Ausführungsformen der Ansprüche 4 und 5 dar.

Durch Ausbildung des Fahrzeugrades mit einem Fahrzeugluftreifen, der die Felge vollständig umgibt, wird die Befestigung des Fahrzeugreifens am Fahrzeugrad zusätzlich verbessert. Ein einseitiges Losreißen einer Reifenseitenwand ist nicht möglich. Außerdem werden Dichtigkeitsprobleme in der Verbindung zwischen Fahrzeugluftreifen und Felge minimiert.

Bevorzugt wird ein Fahrzeugreifen mit einem Niederquerschnittsverhältnis von maximaler Höhe H/Querschnittsbreite B ≤ 0,6 ausgebildet.

Besonders vorteilhaft ist die Ausbildung eines Fahrzeugrades, bei dem die Verlängerungen der Felgen zu einem Notlaufsattel ergänzt ausgebildet sind. Bei plötzlichem Luftdruckverlust kann der Reifenmantel sich auf den Notlaufsätteln sicher abstützen.

Bevorzugt, weil besonders einfach herzustellen, wird die Reifenseitenwand an den radial inneren Bereichen der Felge anvulkanisiert.

Die Erfindung wird im Folgenden anhand der in den Figuren 1 bis 7 dargestellten Ausführungsbeispiele näher erläutert. Hierin zeigen
- Fig. 1: Schematische Darstellung eines erfindungsgemäßen wulstlosen Fahrzeugluftreifens
- Fig. 2: Weitere Ausführungsform, bei der der Fahrzeugluftreifen die Felge vollständig umgibt
- Fig. 3: Belastungsfall unter Spaltbildung zwischen Reifenseitenwand und Felgenhorn
- Fig. 4: Teilausschnitt eines erfindungsgemäßen Fahrzeugrades mit Felgenhorn aus flexiblen Material
- Fig. 5: Teilausschnitt eines erfindungsgemäßen Fahrzeugreifens mit zum Notlaufsattel ergänzten Felgenhorn
- Fig. 6: Weitere Ausführung eines erfindungsgemäßen Fahrzeugreifens mit zu einem Notlaufsattel ergänzten Felgenhorn
- Fig. 7: Weitere Ausführung eines erfindungsgemäßen Fahrzeugreifens mit einem zu einem Notlaufsattel ergänzten Felgenhorn.

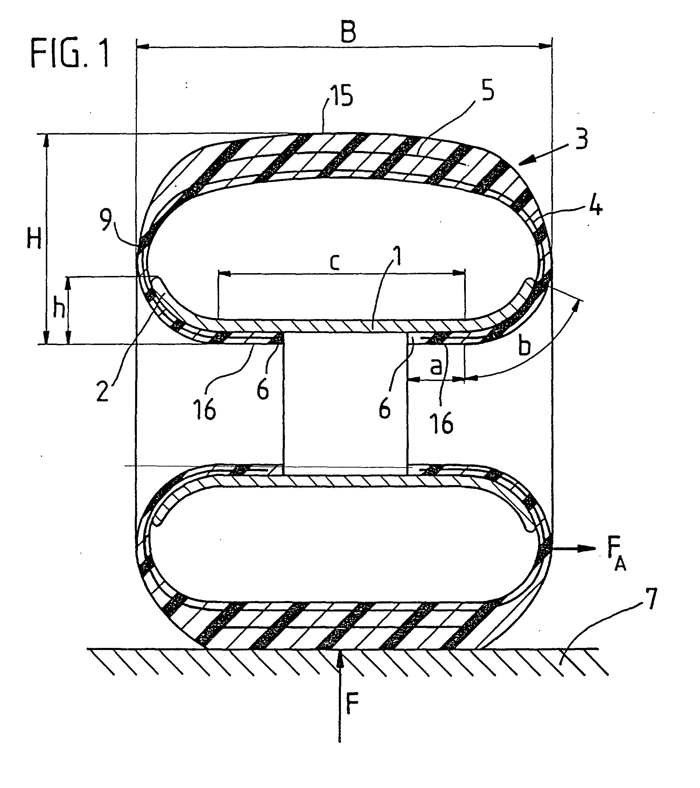

Fig. 1 zeigt ein Fahrzeugrad mit Fahrzeugluftreifen 3 und innenliegender Felge 1 mit einem Verhältnis von maximaler Höhe H zu maximaler Breite B des Fahrzeugluftreifens H/B ≤ 0,6. Der Fahrzeugluftreifen 3 weist eine über den Umfang des Reifens und vom linken Endbereich 6 des Fahrzeugluftreifens zum rechten Endbereich 6 reichende, nicht näher dargestellte, Innenschicht auf, über die eine Karkasse 4 radialer Bauart mit beispielsweise zwei Karkassenlagen aufgebaut ist. Im Bereich der Lauffläche ist radial außerhalb der Karkasse 4 ein Gürtel 5 bekannter Bauart mit beispielsweise zwei Gürtellagen aus in Kautschuk eingebetteten Festigkeitsträgern, z. B. aus Stahlcord, aufgelegt. Der Gürtel reicht über den gesamten Umfang des Reifens hinweg und erstreckt sich in axialer Richtung von einem Reifenschulterbereich in den anderen. Die Stahlcorde verlaufen im spitzen Winkel von beispielsweise 10 - 30° zur Umfangsrichtung. Radial außerhalb der Gürtellagen ist es denkbar, eine nicht dargestellte Gürtelbandage mit im wesentlichen zur Umfangsrichtung verlaufenden Festigkeitsträgern, beispielsweise aus Nylon, aufzuwickeln.

Radial außerhalb des Gürtels, bzw. der Gürtelbandage, ist in bekannter Weise ein über den Umfang des Reifens reichender und sich von Schulterbereich zu Schulterbereich erstreckender Laufstreifen 15 aus Kautschukmaterial aufgelegt. Im Seitenwandbereich 9 ist Kautschukmaterial auf die Karkasse 4 aufgelegt. Das Seitenwandkautschukmaterial reicht vom Schulterbereich bis an das Ende 6.

Der Fahrzeugluftreifen 3 umgreift mit seinen Endbereichen 16 eine innenliegende Felge 1 mit an ihren axialen Enden nach radial außen gekrümmten Hörnern (Verlängerungen) 2. Zwischen den gekrümmten Hörnern ist die Felge an ihrer radial inneren Oberfläche im wesentlichen zylindrisch ausgebildet. Die Krümmung des Horns entspricht der gewünschten Reifenkontur im Bereich des Horns. Die Verlängerung erstreckt sich in eine radiale Höhe h, die zwischen 0,15 und 0,55 mal, vorzugsweise 0,2 und 03, der maximalen Reifenhöhe H entspricht. Beispielsweise wurde h =0,25 mal H gewählt.

Die Endbereiche 16 des Fahrzeugreifens umgreifen die Felge 1 radial innen und erstrecken sich über eine axiale Länge a in den im wesentlichen zylindrisch ausgebildeten Erstreckungsbereich c der Felge 1. Im Längenbereich a ist der Fahrzeugluftreifen mit seinen Endbereichen 16 an die zylindrischen Oberfläche der Felge 1 fest anvulkanisiert. Im Bereich des Horns 2 der Felge liegt die Reifenseitenwand jeweils lediglich unter Vorspannung an. Falls zur Sicherstellung der Verhinderung einer Anvulkanisation im Bereich der Felgenhörner erforderlich, ist es denkbar, herkömmliche Trennmittel in diesem Bereich einzusetzen.

Bei Auflage eines Umfangselementes des Reifens auf die Straßenoberfläche 7 wirken resultierende Normalkräfte F zwischen Fahrzeugluftreifen 3 und Straßenoberfläche. Bei der Eindämpfung dieser Kräfte wirkt auf die Seitenwände 9 des Reifens eine resultierende Kraft F_{A}, die, wie in Fig. 1 mit Pfeil F_{A} dargestellt ist, im wesentlichen in axialer Richtung wirkt und die Seitenwand leicht weiter verkrümmt. Aufgrund der gewählten Vorspannung zwischen Verlängerung 2 und Reifen liegt der Reifen in diesem Normallastfall unter Reduzierung der Vorspannung immer noch an dem Horn 2 an. Bei Kurvenfahrten wird im Bereich der besonders stark belasteten Kurvenaußenseite aufgrund der eingeleiteten Kräfte die Vorspannung zwischen Horn 2 und Reifenseitenwand erhöht. Der Fahrzeugluftreifen 3 wird somit an der besonders stark belasteten Seite durch das Horn versteift. Ein sicheres Handling ist gewährleistet.

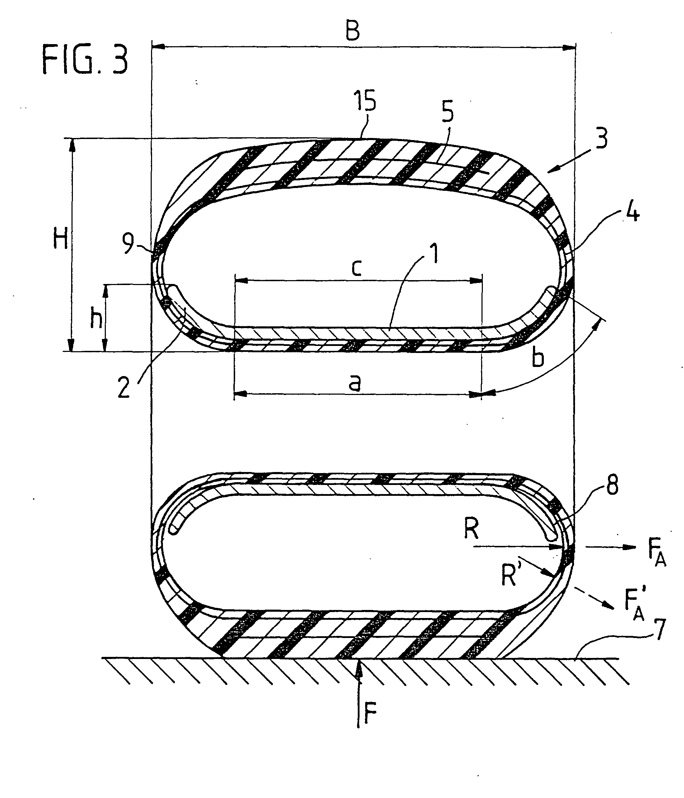

Bei starken Stoßwirkungen auf den Reifen wirken stärkere resultierende Kräfte F_{A} auf die Reifenseitenwände. Diese beulen weiter nach axial außen bei der Eindämpfung aus. Der für die flexible Krümmung der Seitenwand hierzu zur Verfügung stehende Seitenwandbereich reicht dabei vom Schulterbereich des Laufstreifens bis über den gesamten gekrümmten Bereich b der Verlängerung 2 der Felge. Bei starken Stößen hebt die Reifenseitenwand 9 im Bereich der Verlängerung 2 unter Bildung eines Spaltes 8 zwischen Verlängerung 2 und Reifenseitenwand ab. Der bei der Eindämpfung zur flexiblen Verkrümmung der Reifenseitenwand hierdurch ermöglichte Krümmungsradius R ist somit deutlich größer als ein vergleichbarer Krümmungsradius R', der bei herkömmlicher Befestigung der Reifenseitenwand an einem Felgenhorn zur Verfügung steht. Vergleichsweise wurde in Figur 3 ein entsprechender Krümmungsradius R', mit einer entsprechenden auf die Seitenwand wirkenden resultierenden Kraft F_{A'} eingetragen.

Auf besonders starke auf den Reifen einwirkende Stöße können aufgrund des großen Krümmungsradius R und der sehr langen für die Krümmung zur Verfügung stehenden Bogenlänge der Reifenseitenwand zwischen Reifenschulter und zylindrischer Felgenoberfläche unter geringer Flächenbeanspruchung der gekrümmten Seitenwandoberflächen sicher eingedämpft werden.

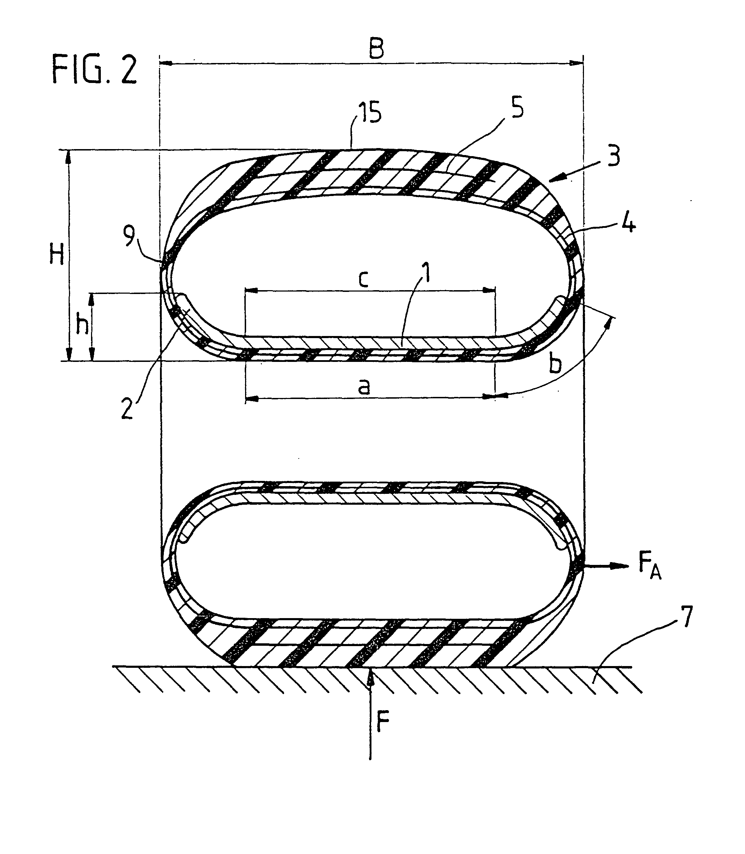

Wie in den Fig. 2 und 3 dargestellt ist, ist es auch denkbar, einen Fahrzeugluftreifen radial innerhalb der Felge mit ihren Endbereichen 6 zu verbinden, so daß eine geschlossene Oberfläche entsteht.

Ebenso ist es denkbar, das Horn 2 in seinem radial äußeren Bereich 2' aus flexiblem Material, beispielsweise aus einer flexiblen Aluminiumlegierung oder aus einer flexiblen Magnesiumlegierung auszubilden und diesen an einer Verbindungsstelle 10 an den ansonsten steifen Felgenhornbereich 2'' der Felge 1 anzugießen. Ebenso ist es denkbar, den Bereich aus flexiblen Kunststoff auszubilden,
wobei der Kunststoff an den steifen Felgenhornbereich 2" aus Metall durch bekannten Verbund für Metall-Kunststoffverbindungen chemisch miteinander verbunden ist. Beispielsweise ist dies durch Polyphenylenether haftvermittlerfrei möglich. Der Kunststoff besitzt eine elastische Kunststoffmatrix und ist verstärkt durch Blas- oder Kunststoff-Fasern.

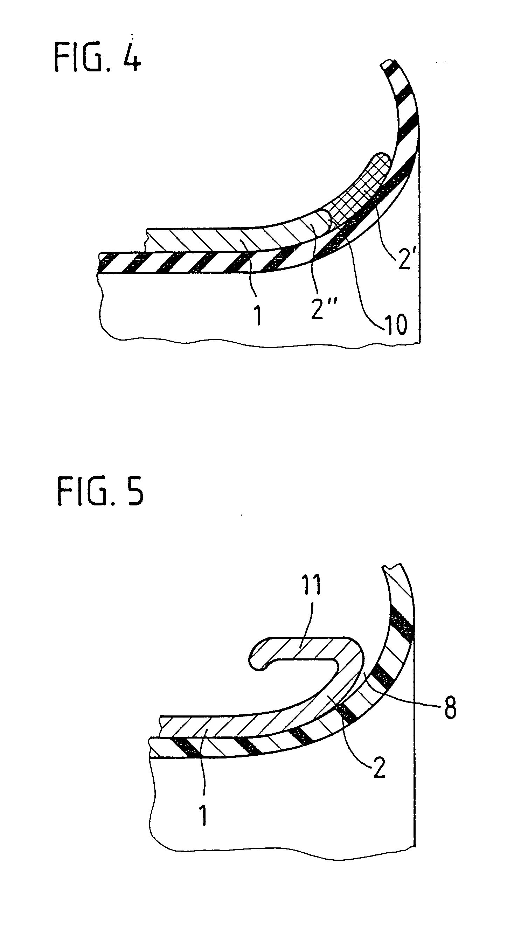

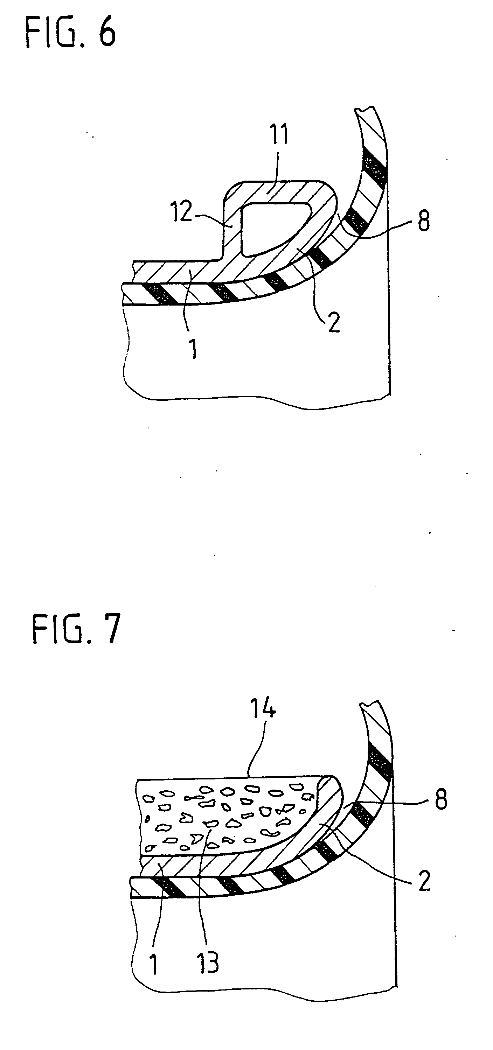

Ebenso ist es auch denkbar, wie in Fig. 5 dargestellt ist, das Horn 2 in ihrem radial äußeren Endbereich mit einem nach axial innen reichenden Notlaufsattel 11, der sich über den gesamten Umfangsbereich des Reifens erstreckt, auszubilden. Bei plötzlichem Innendruckverlust stützt sich der Reifen mit seinem Laufstreifenbereich auf den beiderseitig vorgesehenen, mit im wesentlichen zylindrischer Oberfläche ausgebildeten Notlaufsattel 11 ab. Frühzeitige Zerstörung und Ablösung des Reifens werden vermieden. Ein solcher Notlaufsattel 11 kann mit weiteren Streben 12, wie in Fig. 6 dargestellt ist, falls erforderlich, verstärkt werden.

Ebenso ist es denkbar, wie in Fig. 7 dargestellt ist, die radial äußere Oberfläche der Felge mit zusätzlichem Stützmaterial zu belegen. Zwischen den Hörnern 2 ist die durch die Hörner 2 und die radial äußere Felgenoberfläche gebildete wannenförmige Vertiefung hierzu mit Stützmaterial 13 ausgefüllt. Die Oberfläche des Stützmaterials 13 bildet eine durchgehende zylindrische Notlauffläche 14. Das Stützmaterial ist aus hartem Kunststoff, Gummi oder Kunststoffschaum ausgebildet, das zur Dämpfung unempfindlich gegen Stöße ist und das gute Gleiteigenschaften für den Notlauf ausweist.

Es sind auch Reifen denkbar, bei denen lediglich die Felgen eines Fahrzeugs jeweils nur an der jeweiligen Fahrzeugaußenseite mit einem Horn ausgebildet sind, so daß zumindest bei Kurvenfahrten die jeweils besonders stark belasteten, im Kurvenaußenradius des Fahrzeugs befindlichen Reifenseitenwände axial abgestützt werden.

### Bezugszeichenliste

- 1.: Felge
- 2.: Felgenhorn (Verlängerungen der Felge)
- 3.: Fahrzeugluftreifen
- 4.: Karkasse
- 5.: Gürtel
- 6.: Ende
- 7.: Straßenoberfläche
- 8.: Spalt
- 9.: Seitenwand
- 10.: Verbindungsstelle
- 11.: Notlaufsattel
- 12.: Strebe
- 13.: Stützenmaterial
- 14.: Notlaufsatteloberfläche
- 15.: Lauffläche
- 16.: Endbereich

## Patentansprüche

1. Fahrzeugrad mit wulstlosem Fahrzeugluftreifen aus Gummi oder gummiähnlichen Stoffen, der mit einer Karkasse (4) aus einer oder mehreren Karkassenlagen ausgebildet ist, und mit einer innenliegenden Felge (1),
- bei dem der Fahrzeugluftreifen (3) die Felge (1) im wesentlichen auf ihrer radial innenliegenden Seite umschließt und an einem radial innenliegenden Bereich (a) der Felge (1) befestigt ist und
- bei dem die Felge (1) Zumindest an einem axialen Felgenrand eine sich radial nach außen hin erstreckende Verlängerung aufweist, **dadurch gekennzeichnet, daß** die Verlängerung (2) als im wesentlichen axiale, nicht mit dem Fahrzeugluftreifen (3) verbundene Auflagefläche für die korrespondierende Reifenseitenwand (9) ausgebildet ist.

2. Fahrzeugrad gemäß den Merkmalen von Anspruch 1,
- wobei die Verlängerungen (2) sich bis in eine radiale Höhe erstrecken, die 0,15 bis 0,55 mal, vorzugsweise 0,2 bis 0,3 mal, der maximalen Reifenhöhe H entspricht.

3. Fahrzeugrad gemäß den Merkmalen von Anspruch 1 oder 2,
- bei dem die Verlängerungen (2) jeweils nach radial außen gekrümmt und mit nach radial außen hin abnehmender Steifigkeit ausgebildet sind.

4. Fahrzeugrad gemäß den Merkmalen von Anspruch 3,
- wobei die Felgenverlängerung (2) in ihrer Querschnittskontur in einer Schnittebene durch Felge und Radachse radial nach außen kontinuierlich verjüngt ausgebildet ist.

5. Fahrzeugrad gemäß den Merkmalen von Anspruch 3 oder 4,
- wobei die Felgenverlängerung (2') aus flexiblem Material, insbesondere aus einer Aluminiumlegierung, einer Magnesiumleglierung oder aus einem flexiblen Kunststoff ausgebildet ist, welcher Kunststoff chemisch an der Felge (1) befestigt ist.

6. Fahrzeugrad gemäß den Merkmalen von Anspruch 1,
- wobei der Fahrzeugreifen (3) die Felge (1) vollständig umgibt.

7. Fahrzeugrad gemäß den Merkmalen von Anspruch 1,
- wobei der Fahrzeugreifen (3) ein Höhen-Breitenverhältnis H/B von maximal 0,6 aufweist.

8. Fahrzeugrad gemäß den Merkmalen von Anspruch 1,
- wobei die Verlängerungen (2) der Felge (1) jeweils zu einem Notlaufsattel (11, 14) ergänzt ausgebildet sind.

9. Fahrzeugrad gemäß den Merkmalen von Anspruch 1,
- wobei der Fahrzeugluftreifen (3) an der radial inneren Seite der Felge (1) anvulkanisiert ist.

## Claims

1. Vehicle wheel having a beadless pneumatic vehicle tyre, which is formed from rubber or rubber-like substances and is provided with a carcase (4) comprising one or more carcase plies, and having an internally situated rim (1),
- wherein the pneumatic vehicle tyre (3) surrounds the rim (1) and is secured on a radially internally situated side of the rim (1), and
- wherein the rim (1) includes, at axial rim edges, elongations (2) which extend radially outwardly,
**characterised in that** the elongations (2) are in the form of substantially axial bearing surfaces, which are not connected to the tyre (3), for supporting the corresponding tyre sidewalls (9), and **in that** the tyre (3) is only secured on a radially internally situated, substantially cylindrical region (a) of the rim (1).

2. Vehicle wheel according to the features of claim 1,
- wherein the elongations (2) extend to a radial height which corresponds to between 0.15-times and 0.55-times, preferably between 0.2-times and 0.3-times, the maximum tyre height H.

3. Vehicle wheel according to the features of claim 1 or 2,
- wherein the elongations (2) are each configured to be radially outwardly curved and to have a rigidity which decreases radially outwardly.

4. Vehicle wheel according to the features of claim 3,
- wherein the rim elongation (2) is configured to taper continuously radially outwardly, when viewed with respect to its cross-sectional contour in a sectional plane through the rim and wheel axle.

5. Vehicle wheel according to the features of claim 3 or 4,
- wherein the rim elongation (2') is formed from flexible material, more especially from an aluminium alloy, from a magnesium alloy or from a flexible plastics material, which plastics material is chemically fixed on the rim (1).

6. Vehicle wheel according to the features of claim 1,
- wherein the vehicle tyre (3) completely surrounds the rim (1).

7. Vehicle wheel according to the features of claim 1,
- wherein the vehicle tyre (3) has a maximum height:width ratio H:B of 0.6.

8. Vehicle wheel according to the features of claim 1,
- wherein the elongations (2) of the rim (1) are each supplemented to form an emergency running cradle (11, 14).

9. Vehicle wheel according to the features of claim 1,
- wherein the pneumatic vehicle tyre (3) is prevulcanised on the radially inner side of the rim (1).

## Revendications

1. Roue de véhicule ayant un bandage pneumatique sans talon, en caoutchouc ou dans des matériaux semblables au caoutchouc, lequel bandage pneumatique est constitué avec une carcasse (4) composée d'une ou de plusieurs nappes de carcasse, et une jante (1) placée à l'intérieur,
- roue de véhicule dans laquelle le bandage pneumatique (3) du véhicule entoure la jante (1) et est fixé sur un côté radialement intérieur de la jante (1), et
- roue de véhicule dans laquelle la jante (1) présente, sur des bords axiaux de la jante, des prolongements s'étendant vers l'extérieur, en direction radiale,
**caractérisée**
- **en ce que** les prolongements (2) sont conformés comme des surfaces d'appui pour l'essentiel axiales non reliées au bandage (3), pour les flancs correspondants (9) du bandage, et
- **en ce que** le bandage (3) n'est fixé que sur une zone (a) de la jante (1), pour l'essentiel cylindrique, placée à l'intérieur en direction radiale.

2. Roue de véhicule selon les caractéristiques de la revendication 1,
- où les prolongements (2) s'étendent jusqu'à une hauteur radiale qui correspond de 0,15 fois à 0,55 fois, de préférence de 0,2 fois à 0,3 fois la hauteur maximale H du bandage.

3. Roue de véhicule selon les caractéristiques de la revendication 1 ou 2,
- dans laquelle les prolongements (2) sont recourbés à chaque fois vers l'extérieur en direction radiale et sont configurés en ayant une rigidité diminuant vers l'extérieur en direction radiale.

4. Roue de véhicule selon les caractéristiques de la revendication 3,
- où le prolongement (2) de la jante, dans son profil en section dans un plan en coupe à travers la jante et l'essieu, est conformé en diminuant de façon continue vers l'extérieur en direction radiale.

5. Roue de véhicule selon les caractéristiques de la revendication 3 ou 4,
- où le prolongement (2') de la jante est fabriqué dans un matériau flexible, en particulier dans un alliage d'aluminium, dans un alliage de magnésium ou dans une matière plastique flexible, laquelle matière plastique est fixée chimiquement sur la jante (1).

6. Roue de véhicule selon les caractéristiques de la revendication 1,
- où le bandage pneumatique (3) du véhicule entoure complètement la jante (1).

7. Roue de véhicule selon les caractéristiques de la revendication 1,
- où le bandage pneumatique (3) du véhicule présente un rapport hauteur/largeur (H/B) au maximum de 0,6.

8. Roue de véhicule selon les caractéristiques de la revendication 1,
- où les prolongements (2) de la jante (1) sont conformés à chaque fois en complément d'une pièce d'appui (11, 14) pour roulement de secours.

9. Roue de véhicule selon les caractéristiques de la revendication 1,
- où le bandage pneumatique (3) du véhicule est vulcanisé sur le côté radialement intérieur de la jante (1).
